(19) Europäisches Patentamt
European Patent Office
Office européen des brevets

(11) **EP 4 277 004 A1**

(12) **EUROPEAN PATENT APPLICATION**
published in accordance with Art. 153(4) EPC


(43) Date of publication:
**15.11.2023 Bulletin 2023/46**

(21) Application number: **22878994.7**

(22) Date of filing: **06.10.2022**

(51) International Patent Classification (IPC):
***H01M 50/449*** *(2021.01)* ***H01M 50/414*** *(2021.01)*
***H01M 50/446*** *(2021.01)* ***H01M 4/62*** *(2006.01)*
***H01M 10/058*** *(2010.01)*

(52) Cooperative Patent Classification (CPC):
**H01M 4/62; H01M 10/058; H01M 50/414; H01M 50/446; H01M 50/449;** Y02E 60/10

(86) International application number:
**PCT/KR2022/095127**

(87) International publication number:
**WO 2023/059173 (13.04.2023 Gazette 2023/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.10.2021 KR 20210132448**



(71) Applicant: **LG Energy Solution, Ltd.**
**Seoul 07335 (KR)**

(72) Inventors:
- **KIM, Ji Eun**
  **Daejeon 34122 (KR)**
- **BAE, Dong Hun**
  **Daejeon 34122 (KR)**
- **SHIN, Hwan Ho**
  **Daejeon 34122 (KR)**
- **SHIN, Jin Young**
  **Daejeon 34122 (KR)**
- **YOON, Yeo Ju**
  **Daejeon 34122 (KR)**

(74) Representative: **Hoffmann Eitle**
**Patent- und Rechtsanwälte PartmbB**
**Arabellastraße 30**
**81925 München (DE)**


(54) **SEPARATOR FOR SECONDARY BATTERY**


(57) The present invention relates to a separator for secondary batteries, the separator including a separator substrate having a porous structure, wherein the separator substrate includes a polymer material; and a coating layer on at least one surface of the separator substrate by coating, wherein the coating layer includes a crystalline binder and an amorphous binder miscible with each other, the crystalline binder includes a first crystalline binder and a second crystalline binder, and the amount of the amorphous binder is 2 weight% to 5 weight% based on the total weight of a solid content of the coating layer, whereby the resistance in the coating layer of the separator is reduced and thus ionic conductivity is improved.


【FIG. 4】

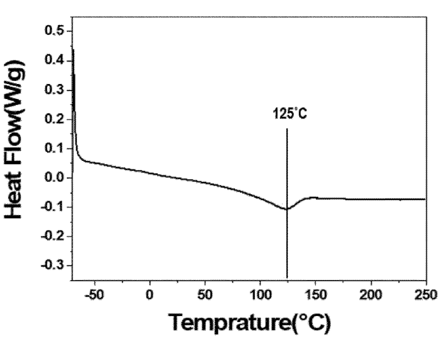


EP 4 277 004 A1

## Description

[Technical Field]

This application claims the benefit of priority to Korean Patent Application No. 2021-0132448 filed on October 6, 2021 and Korean Patent Application No. 2022-0127529 filed on October 6, 2022, the disclosures of which are incorporated herein by reference in theirs entireties.

The present invention relates to a separator for secondary batteries. More particularly, the present invention relates to a separator for secondary batteries configured such that the resistance in a coating layer of the separator is reduced and the force of adhesion between the separator and an electrode is increased.

[Background Art]

Among components of a secondary battery, a separator, which includes a polymer membrane having a porous structure located between a positive electrode and a negative electrode, isolates the positive electrode and the negative electrode from each other, prevents electrical short circuit between the two electrodes, and allows an electrolyte and ions to pass therethrough. Although the separator does not participate in electrochemical reaction of the battery, physical properties of the separator, such as wettability in an electrolytic solution, the degree of porosity, and heat shrinkage, have an influence on the performance and safety of the battery.

In order to enhance the physical properties of the separator, various methods of adding a coating layer to a separator substrate and adding various kinds of materials to the coating layer to change physical properties of the coating layer have been used. As an example, in order to increase mechanical strength of the separator, an inorganic material may be added to the coating layer, or an inorganic material or a hydrate capable of improving flame retardancy and heat resistance of the separator substrate may be added to the coating layer.

The separator may be adhered to an electrode through a lamination process. In order to secure the force of adhesion between the electrode and the separator, a binder may be added to a coating layer composition of the separator, the binder may be guided toward a surface of the coating layer using a humidified phase separation method, whereby an adhesive layer may be formed on the surface of the coating layer.

In general, the behavior of the binder in the electrolytic solution varies depending on crystallinity of the binder. For example, the rate of impregnation of a binder having high crystallinity with the electrolytic solution is low, whereby mobility of the binder is low and the resistance of the separator is increased. In addition, the lifespan performance of a battery having a high-resistance separator applied thereto may be lowered.

Hence, various research to reduce the resistance of the separator and to increase lifespan of the battery has been conducted.

A separator disclosed in Patent Document 1 is configured such that a coating layer is formed on at least one surface of a porous polymer substrate, wherein the coating layer includes inorganic particles and a binder polymer, the binder polymer includes an amorphous adhesive binder polymer and at least one fluorine-based copolymer, the content of the amorphous adhesive binder polymer is 50 parts by weight to 84 parts by weight based on 100 parts by weight of the total content of the binder polymer.

A separator disclosed in Patent Document 2 includes a porous substrate and a porous coating layer formed on at least one surface of the porous substrate, the porous coating layer including inorganic particles and a binder, wherein the weight of the binder is 5 weight% to 40 weight% based on the total weight of the porous coating layer, and the binder includes a fluorine-based binder and a rubber-based binder.

Each of the separators disclosed in Patent Document 1 and Patent Document 2 has effects in that the resistance of the separator is low and the force of adhesion between the separator and an electrode is increased.

However, Patent Document 1 and Patent Document 2 do not disclose technology capable of reducing crystallinity of the binder when a crystalline binder is included in the coating layer of the separator.

Therefore, there is a need for technology capable of reducing the resistance of a separator including a crystalline binder in a coating layer of the separator.

(Prior Art Documents)

(Patent Document 1) Korean Patent Application Publication No. 2020-0034470 (2020.03.31)
(Patent Document 2) Korean Patent Application Publication No. 2017-0138958 (2017.12.18)

[Disclosure]

[Technical Problem]

The present invention has been made in view of the above problems, and it is an object of the present invention to provide a separator for secondary batteries configured such that mobility of a binder constituting a coating layer of the separator is improved, whereby the resistance of the separator is reduced and the force of adhesion between the separator and an electrode is increased.

[Technical Solution]

A separator for secondary batteries according to the present invention to accomplish the above object includes a separator substrate having a porous structure, wherein the separator substrate includes a polymer material; and a coating layer on at least one surface of the separator substrate by coating, wherein the coating layer includes a crystalline binder and an amorphous binder miscible with each other, the crystalline binder includes a first crystalline binder and a second crystalline binder, and the amount of the amorphous binder is greater than 1 weight% to less than 10 weight% based on the total weight of a solid content of the coating layer.

Each of the crystalline binder and the amorphous binder may be a non-aqueous binder.

The crystalline binder may be a polyvinylidene fluoride (PVDF)-containing copolymer.

The amorphous binder may be at least one selected from the group consisting of an acrylate-containing polymer or a copolymer thereof, polyvinylpyrrolidone-co-polyvinyl acetate, and polyvinyl acetate.

The acrylate-based polymer or the copolymer thereof may be any one represented by Chemical Formula 1 below or at least one selected from the group consisting of methyl acrylate, ethyl acrylate, butyl acrylate, 2-ethylhexyl acrylate, methyl methacrylate, and ethyl methacrylate.

Chemical Formula 1

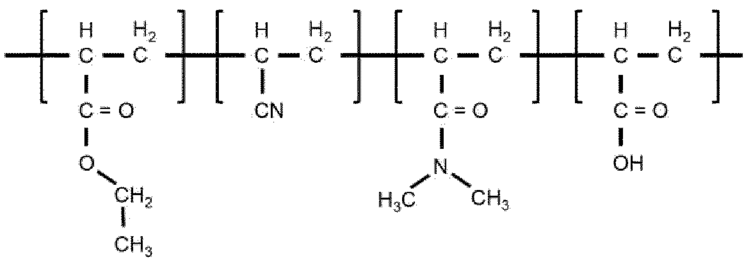

The amount of the amorphous binder may be greater than 5 weight% to less than 50 weight% based on the total weight of the crystalline binder and the amorphous binder.

The weight average molecular weight of the amorphous binder may be less than 1,000,000.

When the separator is thermally treated at 80°C for 3 hours, the resistance of the separator may be lower than 1.00 Q.

When the separator for secondary batteries is impregnated with an electrolytic solution and thermally treated, an inorganic material in the coating layer may be exposed from a surface of the separator.

The present invention provides a secondary battery including an electrode assembly comprising a positive electrode and a negative electrode stacked wherein the separator for secondary batteries is interposed therebetween.

A binder located in a surface of a coating layer of the separator for secondary batteries may be dissolved in an electrolytic solution, may move into the positive electrode and the negative electrode, and may be distributed in the positive electrode and the negative electrode.

In addition, the present invention provides a battery module including the secondary battery.

In addition, the present invention may provide various combinations of the above solving means.

[Advantageous Effects]

As is apparent from the above description, a separator for secondary batteries according to the present invention is configured such that a coating layer includes a crystalline binder and an amorphous binder miscible with each other, whereby solubility of the binder in an electrolytic solution is improved, compared to when only a crystalline binder is

included, and therefore mobility of the binder is increased. Consequently, the resistance of the separator is reduced and ionic conductivity is improved.

In addition, when the separator for secondary batteries according to the present invention is adhered to an electrode by lamination, the binder in a surface of the coating layer of the separator is dissolved in the electrolytic solution and is uniformly distributed in the electrode, whereby the resistance of a battery cell may be reduced.

[Description of Drawings]

FIG. 1 is an SEM photograph before a separator according to Example 1 is impregnated with an electrolytic solution.
FIG. 2 is an SEM photograph after the separator according to Example 1 has been impregnated with the electrolytic solution at 25°C.
FIG. 3 is an SEM photograph after the separator according to Example 1 has been impregnated with the electrolytic solution at 80°C.
FIG. 4 is a graph showing DSC results of a separator according to Example 2.
FIG. 5 is a graph showing DSC results of a separator according to Comparative Example 1.

[Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Also, in the description of the invention and the claims of the present application, a solid content of a coating layer, which is the remainder of the coating layer excluding a solvent, may be an inorganic material, a binder, and a dispersant added to the solvent when a coating layer slurry is manufactured.

Hereinafter, the present invention will be described in more detail.

A separator for secondary batteries according to the present invention may include a separator substrate having a porous structure, the separator substrate being made of a polymer material, and a coating layer formed on at least one surface of the separator substrate by coating, wherein the coating layer may include a crystalline binder and an amorphous binder miscible with each other, and the crystalline binder may include a first crystalline binder and a second crystalline binder.

As described above, the crystalline binder and the amorphous binder included in the coating layer are miscible with each other. When the crystalline binder and the amorphous binder are mixed with each other, therefore, crystallinity of the binder is reduced, whereby solubility of the binder in an electrolytic solution is increased, compared to when only the crystalline binder is provided. As a result, resistance in the coating layer of the separator may be reduced, and therefore it is possible to manufacture a separator having low resistance.

In addition, when the separator for secondary batteries and an electrode are laminated, the binder in the surface of the coating layer of the separator for secondary batteries is dissolved in the electrolytic solution, whereby the binder is uniformly located in the electrode and the separator, and therefore it is possible to manufacture a secondary battery having increased force of adhesion between the electrode and the separator and reduced resistance.

The separator substrate electrically insulates a negative electrode and a positive electrode from each other, thereby preventing short circuit, and includes pores configured to allow lithium ions to pass therethrough. A porous membrane having high resistance to the electrolytic solution, which is an organic solvent, and a very small pore diameter

may be used as the separator substrate. The separator substrate is not particularly restricted as long as the separator substrate can generally be used as the material for the separator for secondary batteries. For example, the separator substrate may include a resin, such as a polyolefin-based resin, including polyethylene, polypropylene, and polybutene, polyvinyl chloride, polyethylene terephthalate, polycycloolefin, polyethersulfone, polyamide, polyimide, polyimide amide, polyaramide, polycycloolefin, nylon, polytetrafluoroethylene, a mixture thereof, or a copolymer thereof. Thereamong, the polyolefin-based resin is preferably used, since applicability of the coating layer slurry is high and the thickness of the separator for secondary batteries is reduced, whereby the percentage of an electrode active material layer in the battery is increased and thus the capacity per unit volume thereof is increased.

The thickness of the separator substrate may be 1 um to 100 um, specifically 1 um to 30 um, and the pore diameter of the separator substrate may generally be 0.01 um to 10 $\mu$m.

The coating layer includes an inorganic material configured to improve mechanical properties and insulation of the separator substrate and a binder configured to maintain binding between inorganic particles and to increase the force of adhesion between the electrode and the separator.

The inorganic material is not particularly restricted as long as the inorganic material forms the thickness of the coating layer so as to be uniform and does not undergo oxidation and/or reduction within an operation voltage range of a secondary battery to which the present invention is applied. Particularly, when inorganic particles having ion transfer ability are used, ionic conductivity of an electrochemical device may be increased, whereby performance of the battery may be improved. In addition, when inorganic particles having high permittivity are used as the inorganic particles, the degree of dissociation of electrolyte salt, e.g. lithium salt, in a liquid electrolyte may be increased, whereby ionic conductivity of the electrolytic solution may be improved.

An example of the inorganic material may be an inorganic material having at least one of lithium ion transfer ability, piezoelectricity, and flame retardancy.

The inorganic material having high lithium ion transfer ability refers to an inorganic material that contains a lithium element but moves lithium ions without storage of lithium. The inorganic material having lithium ion transfer ability is capable of transferring and moving lithium ions due to a kind of defect present in a particle structure thereof. Consequently, lithium ion conductivity in the battery may be improved, whereby performance of the battery may be improved.

The inorganic material having lithium ion transfer ability may be, for example, at least one selected from the group consisting of lithium phosphate, lithium titanium phosphate, lithium aluminum titanium phosphate, $(LiAlTiP)_xO_y$-based glass, lithium lanthanum titanate, lithium germanium thiophosphate, lithium nitride ($Li_xN_y$, 0<x<4, 0<y<2), such as $Li_3N$, $SiS_2$-based glass ($Li_xSi_yS_z$, 0<x<3, 0<y<2, 0<z<4), such as $Li_3PO_4$-$Li_2S$-$SiS_2$, $P_2S_5$-based glass ($Li_xP_yS_z$, 0<x<3, 0<y<3, 0<z<7), such as LiI-$Li_2S$-$P_2S_5$, and a mixture thereof. However, the present invention is not limited thereto.

The inorganic material having piezoelectricity, which means a material that is a nonconductor at atmospheric pressure but has a physical property, such as electrical conduction, due to a change in internal structure thereof when predetermined pressure is applied thereto, is a material that has a permittivity constant of 100 or more, i.e. high permittivity, and is configured such that one surface thereof is charged with positive electricity while the other surface thereof is charged with negative electricity due to electric charge generated when predetermined pressure is applied thereto so as to be tensed or compressed, whereby a potential difference is generated between opposite surfaces thereof.

When the inorganic material having the above characteristics is used, when internal short circuit occurs between the positive electrode and the negative electrode due to external impact caused by local crush, a nail, etc., the positive electrode and the negative electrode do not directly contact each other due to the inorganic particles formed on the separator by coating, and a potential difference is generated in the inorganic particles due to piezoelectricity of the inorganic particles, whereby electrons move between the positive electrode and the negative electrode, i.e. microcurrent flows therebetween, and therefore voltage of the battery is slowly reduced and thus safety of the battery is improved.

The inorganic particles having piezoelectricity may be, for example, $BaTiO_3$, $Pb(Zr,Ti)O_3$ (PZT), $Pb_{1-x}La_xZr_{1-y}Ti_yO_3$ (PLZT) (0<x<1, 0<y<1), $Pb(Mg_{1/3}Nb_{2/3})O_3$-$PbTiO_3$ (PMN-PT), hafnia ($HfO_2$), or a mixture thereof. However, the present invention is not limited thereto.

The inorganic material having flame retardancy may prevent overcharging of the secondary battery and may add flame retardant properties to the separator or may prevent an abrupt increase in temperature of the battery. The inorganic material having flame retardancy may be at least one selected from the group consisting of an antimony-containing compound, a metal oxide, a metal hydroxide, or a metal hydrate, a guanidine-based compound, a boron-containing compound, and a zinc stannate compound.

Specifically, the antimony-containing compound is one selected from among antimony trioxide ($Sb_2O_3$), antimony tetroxide ($Sb_2O_4$), and antimony pentoxide ($Sb_2O_3$). The metal oxide, the metal hydroxide, or the metal hydrate is one selected from among alumina ($Al_2O_3$), magnesium hydroxide, aluminum hydroxide ($Al(OH)_3$), aluminum oxyhydroxide (AlO(OH)), and $CaO{\cdot}Al_2O_3{\cdot}6H_2O$. The guanidine-based compound is one selected from the group consisting of guanidine nitrate, guanidine sulfamate, guanidine phosphate, and guanylurea phosphate. The boron-containing compound is $H_3BO_3$ or $HBO_2$. The zinc stannate compound is one selected from among $Zn_2SnO_4$, $ZnSnO_3$, and $ZnSn(OH)_6$.

The inorganic material may be included so as to account for 10 weight% to 90 weight% based on the total

weight of a solid content of the coating layer. If the inorganic material is included so as to account for less than 10 weight%, it is difficult to achieve an effect that can be obtained by adding the inorganic material, which is undesirable. If the inorganic material is included so as to account for greater than 90 weight%, the content of a variable binder is too small, whereby the force of adhesion between the inorganic particles is reduced, and therefore the inorganic coating layer may be separated from the separator substrate or a non-coating area may be formed at the time of coating, which is also undesirable.

The binder includes a crystalline binder and an amorphous binder, and the crystalline binder includes a first crystalline binder and a second crystalline binder. That is, the crystalline binder of the present invention is constituted by two kinds of crystalline binders.

Each of the crystalline binder and the amorphous binder may be a non-aqueous binder.

Each of the crystalline binder and the amorphous binder is dissolved in a solvent, whereby crystallinity thereof is changed, and therefore the resistance of the separator may be reduced and thus the lifespan of a cell may be increased. In contrast, an aqueous binder is dispersed in water without being dissolved, whereby crystallinity thereof is not changed, and therefore it is difficult to obtain a resistance reduction effect.

For example, each of the first crystalline binder and the second crystalline binder, which are different from each other, may be any one selected from the group consisting of a polyvinylidene fluoride-based copolymer including polyvinylidene fluoride-hexafluoropropylene (PVDF-HFP), polyvinylidene fluoride-trifluoroethylene (PVDF-TrFE), polyvinylidene fluoride-tetrafluoroethylene (PVDF-TFE), polyvinylidene fluoride-trichloroethylene (PVDF-TCE), and polyvinylidene fluoride-chlorotrifluoroethylene (PVDF-CTFE), polybutylacrylate, polyacrylonitrile (PAN), polyethylene-co-vinylacetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, and carboxymethyl cellulose or a mixture or copolymer of two or more thereof.

The amorphous binder may be an acrylate-based polymer, polyvinylpyrrolidone-co-vinyl acetate (PVP-VAc), polyvinyl acetate (PVAc), cyanoethyl polyvinyl alcohol (PVA-CN), polybutadiene, styrene butadiene rubber (SBR), or polymethylmethacrylate (PMMA).

The amount of the amorphous binder may be 2 weight% to 5 weight% based on the total weight of the solid content of the coating layer. If the amount of the amorphous binder is less than 2 weight% based on the total weight of the solid content of the coating layer, a crystallinity reduction effect due to addition of the amorphous binder is small, whereby an effect of decreasing solubility in the electrolytic solution is low. Consequently, it is difficult to obtain a separator resistance reduction effect. If the amount of the amorphous binder is greater than 5 weight% based on the total weight of the solid content of the coating layer, the amount of the amorphous binder dissolved in the electrolytic solution is increased, whereby viscosity of the electrolytic solution may be increased, and therefore the resistance of the separator is increased.

The amount of the amorphous binder may be greater than 5 weight% to less than 50 weight% based on the total weight of the crystalline binder and the amorphous binder.

If the amount of the amorphous binder is 5 weight% or less based on the total weight of the binders, a crystallinity reduction effect due to addition of the amorphous binder is small, whereby an effect of decreasing solubility in the electrolytic solution is low. Consequently, it is difficult to obtain a separator resistance reduction effect. If the amount of the amorphous binder is 50 weight% or more based on the total weight of the binders, the amount of the amorphous binder dissolved in the electrolytic solution is increased, whereby viscosity of the electrolytic solution may be increased, and therefore the resistance of the separator is increased.

The weight average molecular weight of the amorphous binder may be less than 1,000,000. If the weight average molecular weight of the amorphous binder is 1,000,000 or more, which means that the weight average molecular weight of the binder is too large, solubility in the electrolytic solution is reduced, whereby a resistance reduction effect is also lowered. In addition, some high molecular weight binder dissolved in the electrolytic solution increases viscosity of the electrolytic solution, whereby the resistance of the separator may be increased, which is undesirable.

The coating layer may further include a dispersant in order to further improve dispersibility of the inorganic material. The dispersant serves to maintain the state in which the inorganic material is uniformly dispersed in the binder at the time of manufacturing the coating layer slurry. For example, at least one selected from the group consisting of oil-soluble polyamine, an oil-soluble amine compound, fatty acid, fatty alcohol, sorbitan fatty acid ester, tannic acid, and pyrogallic acid may be used as the dispersant.

A secondary battery according to the present invention may include an electrode assembly configured such that a positive electrode and a negative electrode are stacked in the state in which the separator for secondary batteries is interposed therebetween, wherein the electrode assembly may be impregnated with a non-aqueous electrolytic solution containing lithium salt.

The separator for secondary batteries includes an amorphous binder having excellent solubility in the electrolytic solution. When a coating layer slurry in which a crystalline binder and an amorphous binder are mixed with each other is formed on a separator substrate by coating and high-temperature treatment is performed thereon, the binder in the

surface of the coating layer of the separator for secondary batteries is dissolved in the electrolytic solution. The binder dissolved in the electrolytic solution moves into the positive electrode and the negative electrode and is then distributed therein. As a result, the mixed binders in the surface of the separator for secondary batteries are uniformly located in the separator, the positive electrode, and the negative electrode, whereby the resistance in the coating layer may be reduced and the force of adhesion between the electrode and the separator may be increased.

For example, the positive electrode may be manufactured by applying a positive electrode mixture of a positive electrode active material constituted by positive electrode active material particles, a conductive agent, and a binder to a positive electrode current collector. A filler may be further added to the positive electrode mixture as needed.

In general, the positive electrode current collector is manufactured so as to have a thickness of 3 um to 500 um. The positive electrode current collector is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, or titanium. Alternatively, the positive electrode current collector may be made of aluminum or stainless steel, the surface of which is treated with carbon, nickel, titanium, or silver. Specifically, aluminum may be used. The current collector may have a micro-scale uneven pattern formed on the surface thereof so as to increase adhesive force of the positive electrode active material. The current collector may be configured in any of various forms, such as a film, a sheet, a foil, a net, a porous body, a foam body, and a non-woven fabric body.

In addition to the positive electrode active material particles, the positive electrode active material may be constituted, for example, by a layered compound, such as a lithium nickel oxide ($LiNiO_2$), or a compound substituted with one or more transition metals; a lithium manganese oxide represented by the chemical formula $Li_{1+x}Mn_{2-x}O_4$ (where x = 0 to 0.33) or a lithium manganese oxide, such as $LiMnO_3$, $LiMn_2O_3$, or $LiMnO_2$; a lithium copper oxide ($Li_2CuO_2$); a vanadium oxide, such as $LiV_3O_8$, $LiV_3O_4$, $V_2O_5$, or $Cu_2V_2O_7$; a Ni-sited lithium nickel oxide represented by the chemical formula $LiNi_{1-x}M_xO_2$ (where M = Co, Mn, Al, Cu, Fe, Mg, B, or Ga, and x = 0.01 to 0.3); a lithium manganese composite oxide represented by the chemical formula $LiMn_{2-x}M_xO_2$ (where M = Co, Ni, Fe, Cr, Zn, or Ta, and x = 0.01 to 0.1) or the chemical formula $Li_2Mn_3MO_8$ (where M = Fe, Co, Ni, Cu, or Zn) ; $LiMn_2O_4$ in which a portion of Li in the chemical formula is replaced by alkaline earth metal ions; a disulfide compound; or $Fe_2(MoO_4)_3$. However, the present invention is not limited thereto.

The conductive agent is generally added so that the conductive agent accounts for 0.1 weight% to 30 weight% based on the total weight of the mixture including the positive electrode active material. The conductive agent is not particularly restricted as long as the conductive agent exhibits high conductivity without inducing any chemical change in a battery to which the conductive agent is applied. For example, graphite, such as natural graphite or artificial graphite; carbon black, such as acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used as the conductive agent.

The binder, which is included in the positive electrode, is a component assisting in binding between the active material and the conductive agent and in binding with the current collector. The binder is generally added in an amount of 0.1 weight% to 30 weight% based on the total weight of the mixture including the positive electrode active material. As examples of the binder, there may be used polyvinylidene fluoride, polyvinyl alcohol, carboxymethylcellulose (CMC), starch, hydroxypropylcellulose, regenerated cellulose, polyvinyl pyrrolidone, tetrafluoroethylene, polyethylene, polypropylene, ethylene-propylene-diene terpolymer, styrene butadiene rubber, fluoro rubber, and various copolymers.

The negative electrode may be manufactured by applying a negative electrode active material to a negative electrode current collector and drying the same. The above-described components included in the positive electrode may be optionally further included as needed.

The negative electrode current collector is generally manufactured so as to have a thickness of 3 um to 500 um. The negative electrode current collector is not particularly restricted, as long as the negative electrode current collector exhibits high conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy. In addition, the negative electrode current collector may have a micro-scale uneven pattern formed on the surface thereof so as to increase binding force of the negative electrode active material, in the same manner as the positive electrode current collector. The negative electrode current collector may be configured in any of various forms, such as a film, a sheet, a foil, a net, a porous body, a foam body, and a non-woven fabric body.

As the negative electrode active material, for example, there may be used carbon, such as a non-graphitizing carbon or a graphite-based carbon; a metal composite oxide, such as $Li_xFe_2O_3$ ($0 \le x \le 1$), $Li_xWO_2$ ($0 \le x \le 1$), $Sn_xMe_{1-x}Me'_yO_z$ (Me: Mn, Fe, Pb, Ge; Me': Al, B, P, Si, Group 1, 2, and 3 elements of the periodic table, halogen; $0<x \le 1$; $1 \le y \le 3$; $1 \le z \le 8$);

lithium metal; a lithium alloy; a silicon-based alloy; a tin-based alloy; a metal oxide, such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_3$, $Bi_2O_3$, $Bi_2O_4$, or $Bi_2O_3$; a conductive polymer, such as polyacetylene; or a Li-Co-Ni based material.

The non-aqueous electrolytic solution containing lithium salt may be composed of an electrolytic solution and lithium salt. A non-aqueous organic solvent, an organic solid electrolyte, or an inorganic solid electrolyte is used as the electrolytic solution.

For example, a non-protic organic solvent, such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydroxy Franc, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, or ethyl propionate, may be used as the non-aqueous organic solvent.

For example, a polyethylene derivative, a polyethylene oxide derivative, a polypropylene oxide derivative, a phosphoric acid ester polymer, poly agitation lysine, polyester sulfide, polyvinyl alcohol, polyvinylidene fluoride, or a polymer including an ionic dissociation group may be used as the organic solid electrolyte.

For example, a nitride, halide, or sulfate of Li, such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, or $Li_3PO_4$-$Li_2S$-$SiS_2$, may be used as the inorganic solid electrolyte.

The lithium salt is a material that is readily soluble in the non-aqueous electrolytic solution. For example, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, chloroborane lithium, lower aliphatic carboxylic acid lithium, lithium tetraphenyl borate, or imide may be used as the lithium salt.

In addition, the present invention provides a battery module or a battery pack including the secondary battery as a unit cell and provides a device including the battery module or the battery pack.

Concrete examples of the device may include small-sized devices, such as a computer, a cellular phone, and a power tool, and medium- or large-sized devices, such as a power tool driven by an electric motor, an electric automobile, including an electric vehicle (EV), a hybrid electric vehicle (HEV), or a plug-in hybrid electric vehicle (PHEV), an electric two-wheeled vehicle, including an electric bicycle (E-bike) or an electric scooter (E-scooter), an electric golf cart, and an energy storage system. However, the present invention is not limited thereto.

The structures of the battery module, the battery pack, and the device are well known in the art to which the present invention pertains, and thus a detailed description thereof will be omitted.

Hereinafter, the present invention will be described with reference to examples. These examples are provided only for easier understanding of the present invention and should not be construed as limiting the scope of the present invention.

<Example 1>

In order to manufacture a coating layer slurry of a separator for secondary batteries, 14 weight% of polyvinylidene fluoride-hexafluoropropylene (PVDF-HFP) having a weight average molecular weight of 400,000 and including hexafluoropropylene having a content of 15%, 4 weight% of polyvinylidene fluoride-chlorotrifluoroethylene (PVDF-CTFE) having a weight average molecular weight of 450,000 and including chlorotrifluoroethylene having a content of 20%, 2 weight% of an acrylate-based polymer, 79 weight% of alumina ($Al_2O_3$), as an inorganic material, and 1 weight% of tannic acid having a molecular weight of 1,700, as a dispersant, were introduced into acetone and mixed with each other.

The glass transition temperature of the acrylate-based polymer was 26°C, and the weight average molecular weight of the acrylate-based polymer was 200,000.

A polyolefin-based separator substrate was coated with the coating layer slurry using a dip coating method under a condition having a relative humidity of 40% to manufacture a separator. The thickness of the coating layer was 8 um, and the loading amount of the coating layer slurry was 13.5 $g/m^2$.

<Example 2>

A separator was manufactured using the same method as in Example 1 except that polyvinylpyrrolidone-co-vinyl acetate was used instead of the acrylate-based polymer, unlike Example 1.

<Example 3>

A separator was manufactured using the same method as in Example 1 except that polyvinyl acetate was used instead of the acrylate-based polymer, unlike Example 1.

<Comparative Example 1>

A separator was manufactured using the same method as in Example 1 except that the acrylate-based polymer was omitted, 15 weight% of polyvinylidene fluoride-hexafluoropropylene was included, and 5 weight% of polyvinylidene fluoride-trichloroethylene was included, unlike Example 1.

<Comparative Example 2>

A separator was manufactured using the same method as in Example 1 except that 15 weight% of polyvinylidene fluoride-hexafluoropropylene was included and 1 weight% of the acrylate-based polymer was included, unlike Example 1.

<Comparative Example 3>

A separator was manufactured using the same method as in Example 1 except that 8 weight% of polyvinylidene fluoride-hexafluoropropylene was included, 2 weight% of polyvinylidene fluoride-trichloroethylene was included, and 10 weight% of the acrylate-based polymer was included, unlike Example 1.

<Comparative Example 4>

A separator was manufactured using the same method as in Example 1 except that the glass transition temperature of the acrylate-based polymer was 30°C and the weight average molecular weight of the acrylate-based polymer was 1,200,000, unlike Example 1.

<Experimental Example 1> Measurement of crystallinity

Crystallinity of the separators manufactured according to Example 1 to Example 3 and Comparative Example 1 to Comparative Example 4 was measured using a Discovery DSC250, which is a differential scanning calorimeter (DSC) of TA instruments.

The peak temperature and heat capacity were analyzed from temperature distribution measured while heating, cooling, and heating were performed at a speed of 10°C/min within a range of 60°C below zero to 250°C above zero. Crystallinity was calculated as represented by the following formula. Crystallinity thus calculated is shown in Table 1 below, and DSC results of Example 2 and Comparative Example 1 are shown in FIGs. 4 and 5, respectively.

$$\text{Crystallinity (\%)} = \frac{\Delta H_m \text{ (J/g) of coating layer binder}}{110 \text{ J/g } (\Delta H_m \text{ (J/g) of PVDF having a crystallinity of 100\%})}$$

In the above formula, $\Delta Hm$ indicates heat of fusion of the binder.

<Experimental Example 2> Solubility in electrolytic solution (%)

Each of the separators manufactured according to Example 1 to Example 3 and Comparative Example 1 to Comparative Example 4 was cut so as to have a width of 5 cm and a length of 5 cm, and the initial weight A of each separator was measured.

An electrolytic solution including 1 M of $LiPF_6$ and having ethylene carbonate (EC) and ethyl methyl carbonate (EMC) mixed with each other so as to have a volume ratio of 3:7 was prepared as an electrolytic solution. The separators were immersed in the electrolytic solution under the following conditions, and then the separators were separated from the electrolytic solution.

- Immersed at 25°C for 24 hours
- Immersed at 80°C for 24 hours

The separators were washed with ethanol, were filtered, and were dried at 60°C. The weight B of each of the dried separators was measured.

Solubility of binders in the separators was calculated as represented by the following formula, and the results thereof are shown in Table 1 below.

$$\text{Solubility}\ (\%) = \frac{A - B}{A} * 100$$

In addition, SEM photographs before the separator according to Example 1 was impregnated with the electrolytic solution (A), after the separator according to Example 1 was impregnated with the electrolytic solution at room temperature (25°C) for 24 hours (B), and after the separator according to Example 1 was treated at 80°C for 3 hours (C) are shown in FIGs. 1 to 3, respectively.

FIG. 1 is an SEM photograph before the separator according to Example 1 is impregnated with the electrolytic solution, FIG. 2 is an SEM photograph after the separator according to Example 1 has been impregnated with the electrolytic solution at 25°C, and FIG. 3 is an SEM photograph after the separator according to Example 1 has been impregnated with the electrolytic solution at 80°C.

Referring to FIGs. 1 to 3, when FIGs. 1 and 2 are compared with each other, the separator B shown in FIG. 2 reveals that the electrolytic solution was introduced between binder chains, whereby the volume of the binder was increased, and PVDF-HFP located in the surface of the separator swelled in the electrolytic solution, whereby the surface of the separator was flattened.

The separator C thermally treated at a high temperature (80°C) shown in FIG. 3 reveals that the binder located in the surface of the coating layer was dissolved, whereby the inorganic material in the coating layer was exposed. Consequently, it can be seen that, when the separator is laminated with an electrode, the binder dissolved in the electrolytic solution is uniformly spread into the coating layer of the separator and the electrode, whereby not only may the resistance of the separator be reduced but also the resistance of a battery cell may be reduced.

<Experimental Example 3> Resistance of separator (Ω)

In order to measure the resistance of each separator, the separator and an electrolytic solution were received in a case in a sealed state to manufacture a coin cell.

The electrolytic solution was constituted by 1 M of $LiPF_6$ and ethylene carbonate (EC) and ethyl methyl carbonate (EMC) provided so as to have a volume ratio of 3:7.

The resistance of each of the coin cells was measured using Solartron analytical EIS under conditions of a frequency of 100,000 to 10,000 Hz and an AC amplitude of 10 mA, and the results thereof are shown in Table 1 below.

[Table 1]

| | Crystallinity | Solubility of binder in electrolytic solution (%) | | Resistance of separator (Ω) | |
|---|---|---|---|---|---|
| | (%) | 25°C | 80°C | 25°C | 80°C |
| Example 1 | 12.6 | 8.5 | 66.2 | 1.05 | 0.85 |
| Example 2 | 10.5 | 8.2 | 64.5 | 0.98 | 0.82 |
| Example 3 | 11.1 | 8.5 | 64.5 | 0.92 | 0.79 |
| Comparative Example 1 | 16.2 | 8.6 | 17.4 | 1.03 | 1.02 |
| Comparative Example 2 | 15.7 | 8.5 | 20.1 | 1.05 | 1.02 |
| Comparative Example 3 | 9.5 | 12.2 | 70.5 | 1.27 | 1.30 |
| Comparative Example 4 | 12.4 | 9.1 | 30.3 | 1.10 | 1.09 |

Since the separator according to the present invention includes an amorphous binder as a coating layer composition, crystallinity of the entire binder is reduced, whereby solubility of the binder in the electrolytic solution is increased, and therefore the resistance in the coating layer of the separator is lowered.

Referring to Table 1 above, the separators manufactured according to Examples have lower resistances than the separators manufactured according to Comparative Examples. In particular, it can be seen that the resistance reduction effect of the separators manufactured according to Examples is greater at 80°C.

Meanwhile, it can be seen that improvement in solubility of the binder in the electrolytic solution at 25°C is insignificant, whereas solubility of the binders of the separators manufactured according to Examples at 80°C is remarkably improved, compared to the solubility of the binders of the separators manufactured according to Comparative Examples.

Specifically, for Comparative Example 1 including no amorphous binder and Comparative Example 2 having a small amount of the amorphous binder added thereto, solubility of the binder at 80°C was greatly reduced as the result of measurement. Consequently, it can be seen that it is preferable to include a predetermined content or more of the amorphous binder.

In contrast, for Comparative Example 3 having a large amount of the amorphous binder, solubility of the binder at 80°C is higher than in Examples, whereas the resistances of the separator at 25°C and 80°C are higher than in Examples. Ionic conductivity may be reduced due to an increase in resistance of the separator, whereby the lifespan of the battery cell may be reduced. Consequently, it is difficult to evaluate that the manufactured separator can be properly used as a separator for secondary batteries based only on a high content of the amorphous binder.

For Comparative Example 4, in which the weight average molecular weight of the amorphous binder is 1,200,000, solubility of the binder is greatly reduced at 80°C and the resistance of the separator is somewhat high as the result of measurement. Consequently, it can be seen that the weight average molecular weight of the amorphous binder also has an influence on solubility of the binder at a high temperature.

Since the separator according to the present invention includes an amorphous binder within a specific content range, the resistance of the separator is lower than in a conventional separator including no amorphous binder, and solubility of the binder is remarkably improved at a high temperature (80°C), whereby ionic conductivity may be increased, and therefore lifespan characteristics of the battery cell may be improved. When the separators according to Examples are thermally treated at 80°C for 3 hours, the resistance of each of the separators is lower than 1.00 Ω, and therefore it is possible to provide a separator having remarkably reduced resistance.

FIG. 4 is a graph showing DSC results of the separator according to Example 2, and FIG. 5 is a graph showing DSC results of the separator according to Comparative Example 1.

Referring to FIGs. 4 and 5, for the separator according to Comparative Example 1 including only the crystalline binder, crystal peaks of the first crystalline binder and the second crystalline binder appear. In contrast, for Example 2, in which the crystalline binder and the amorphous binder are mixed with each other, crystal peaks of the first crystalline binder and the second crystalline binder become smaller, and overall crystallinity of the binder is reduced, whereby the crystal peak temperature is lower than in Comparative Example 1.

Since the coating layer of the separator according to the present invention includes a crystalline binder and an amorphous binder, as described above, it is possible to provide a secondary battery having reduced resistance of the separator and improved cell lifespan performance.

Those skilled in the art to which the present invention pertains will appreciate that various applications and modifications are possible within the category of the present invention based on the above description.

## Claims

1. A separator for secondary batteries, the separator comprising:

   a separator substrate having a porous structure, wherein the separator substrate comprises a polymer material; and
   a coating layer on at least one surface of the separator substrate by coating, wherein
   the coating layer comprises a crystalline binder and an amorphous binder miscible with each other,
   the crystalline binder comprises a first crystalline binder and a second crystalline binder, and
   an amount of the amorphous binder is greater than 1 weight% to less than 10 weight% based on a total weight of a solid content of the coating layer.

2. The separator according to claim 1, wherein each of the crystalline binder and the amorphous binder is a non-aqueous binder.

3. The separator according to claim 1, wherein the crystalline binder is a polyvinylidene fluoride (PVDF)-containing copolymer.

4. The separator according to claim 1, wherein the amorphous binder is at least one selected from a group consisting of an acrylate-containing polymer or a copolymer thereof, polyvinylpyrrolidone-co-polyvinyl acetate, and polyvinyl acetate.

5. The separator according to claim 1, wherein the amount of the amorphous binder is greater than 5 weight% to less than 50 weight% based on a total weight of the crystalline binder and the amorphous binder.

6. The separator according to claim 1, wherein a weight average molecular weight of the amorphous binder is less than 1,000,000.

7. The separator according to claim 1, wherein, when the separator is thermally treated at 80°C for 3 hours, resistance of the separator is lower than 1.00 Ω.

8. The separator according to claim 1, wherein, when the separator for secondary batteries is impregnated with an electrolytic solution and thermally treated, an inorganic material in the coating layer is exposed from a surface of the separator.

9. A secondary battery comprising an electrode assembly comprising a positive electrode and a negative electrode stacked wherein the separator for secondary batteries according to any one of claims 1 to 8 is interposed therebetween.

10. The secondary battery according to claim 9, wherein a binder located in a surface of a coating layer of the separator for secondary batteries is dissolved in an electrolytic solution, moves into the positive electrode and the negative electrode, and is distributed in the positive electrode and the negative electrode.

11. A battery module comprising the secondary battery according to claim 9.

【FIG. 1】

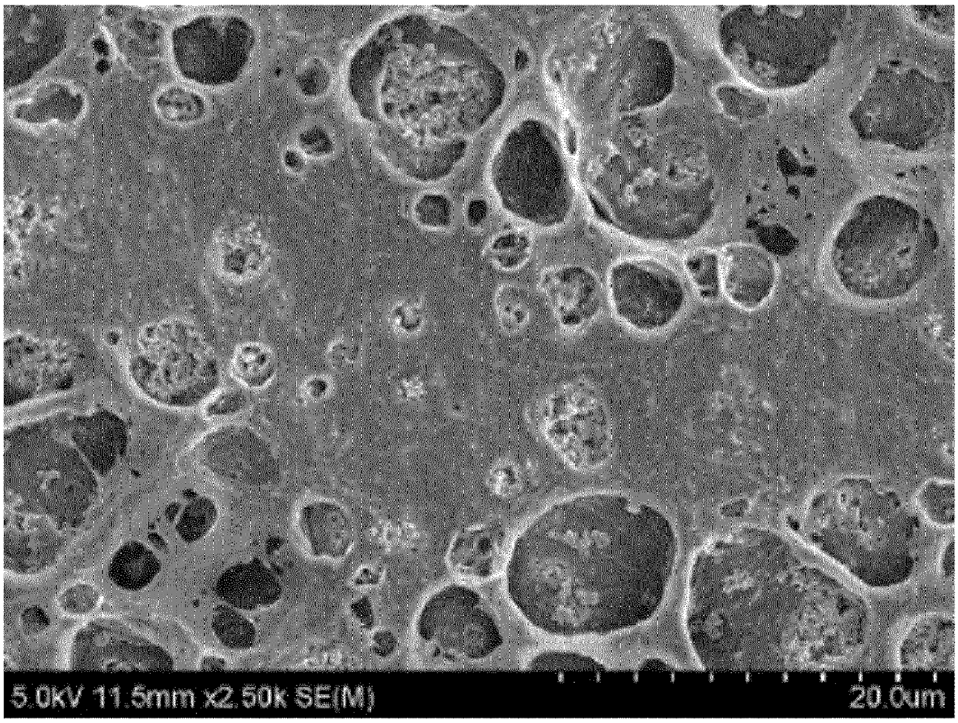


【FIG. 2】

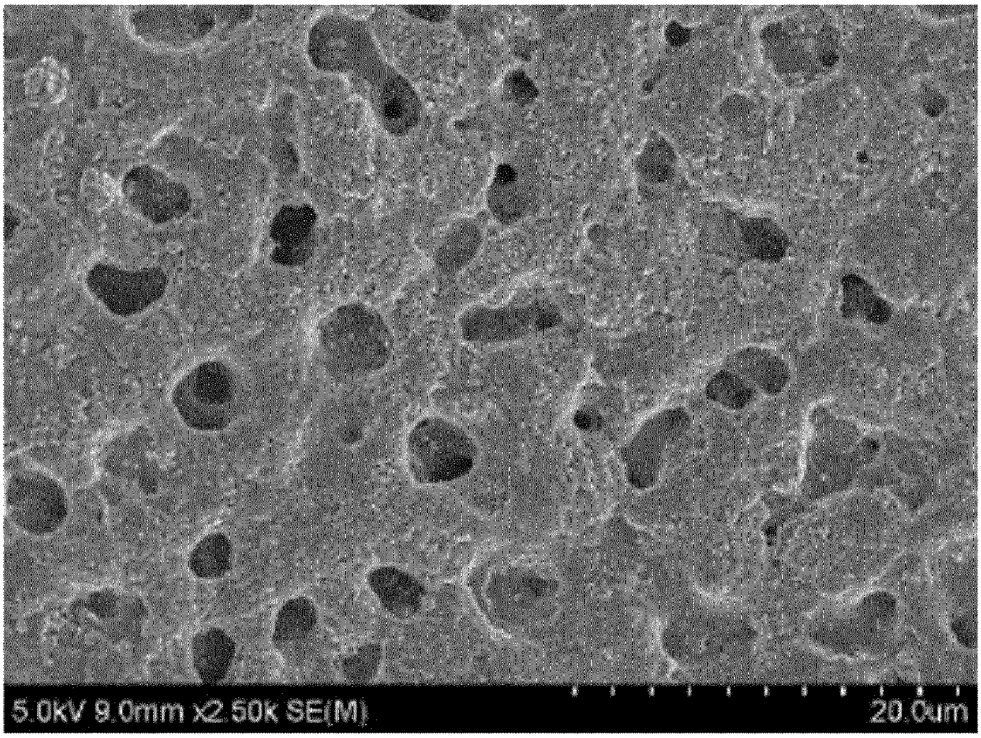

【FIG. 3】

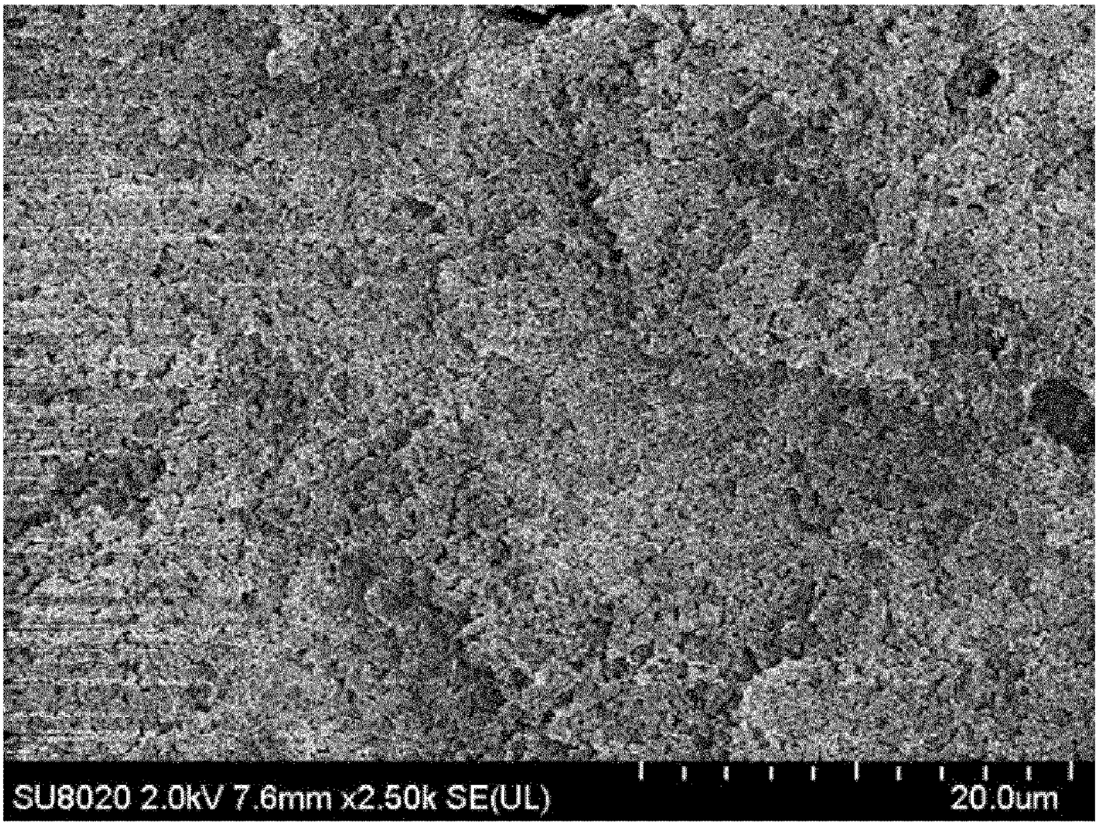
SU8020 2.0kV 7.6mm x2.50k SE(UL)
20.0um

【FIG. 4】

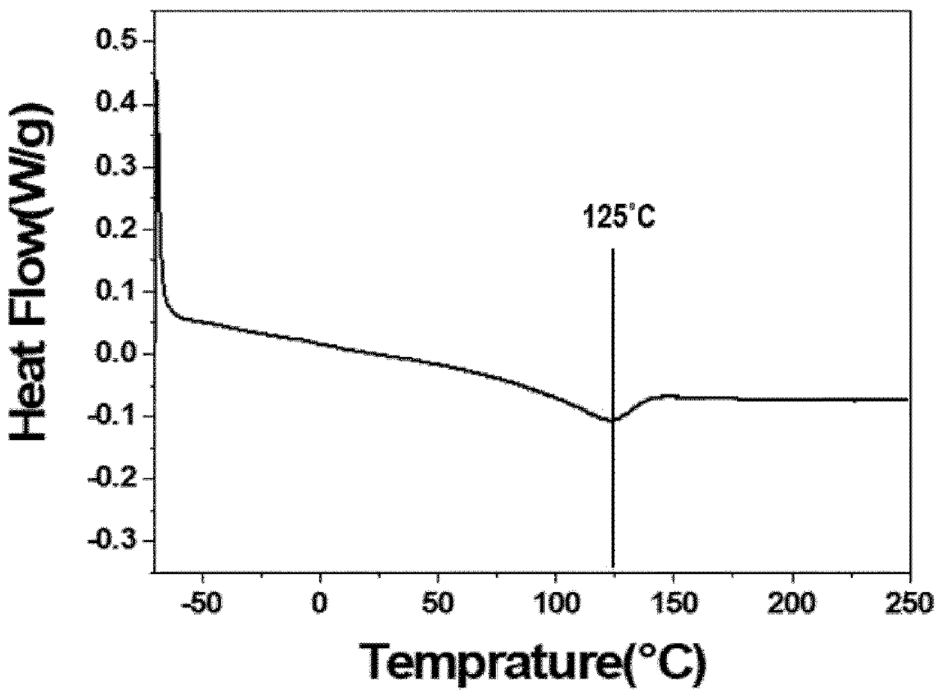
Heat Flow(W/g)
0.5
0.4
0.3
0.2
0.1
0.0
-0.1
-0.2
-0.3
125°C
-50
0
50
100
150
200
250
Temprature(°C)

【FIG. 5】

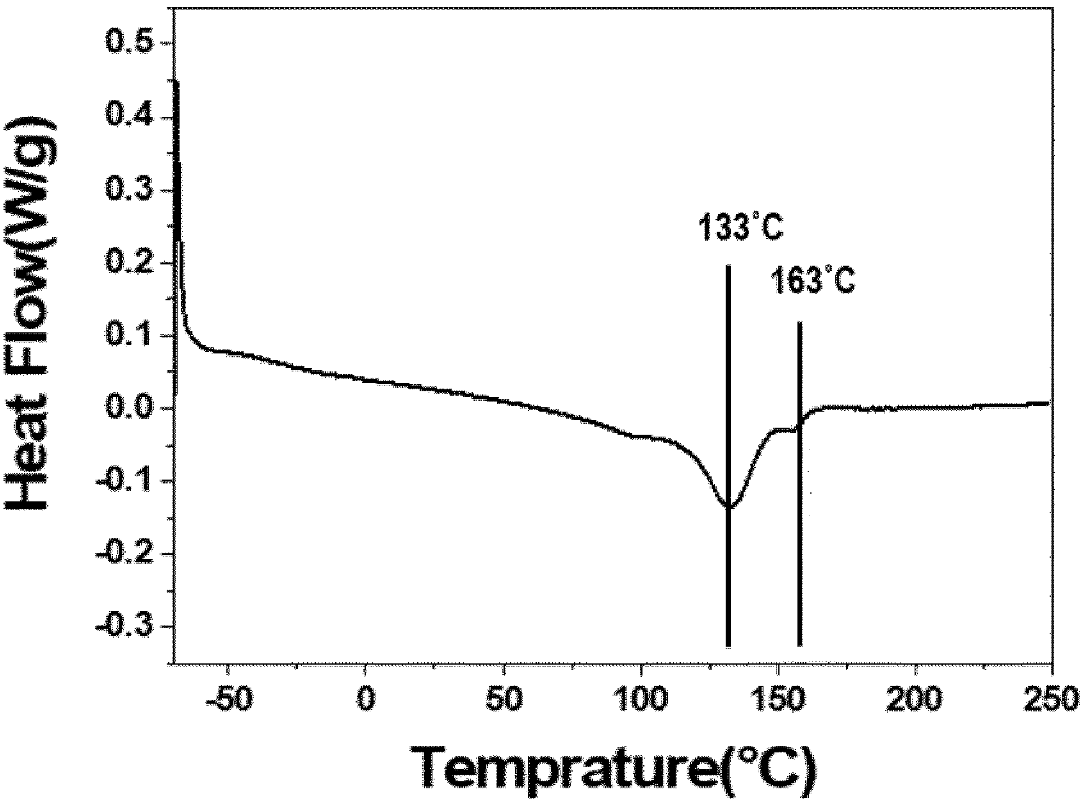

0.5
0.4
0.3
0.2
0.1
0.0
-0.1
-0.2
-0.3
Heat Flow(W/g)
133˚C
163˚C
-50
0
50
100
150
200
250
Temprature(°C)

## INTERNATIONAL SEARCH REPORT

International application No.
**PCT/KR2022/095127**

**A. CLASSIFICATION OF SUBJECT MATTER**

**H01M 50/449**(2021.01)i; **H01M 50/414**(2021.01)i; **H01M 50/446**(2021.01)i; **H01M 4/62**(2006.01)i; **H01M 10/058**(2010.01)i

According to International Patent Classification (IPC) or to both national classification and IPC

**B. FIELDS SEARCHED**

Minimum documentation searched (classification system followed by classification symbols)

H01M 50/449(2021.01); H01G 11/52(2013.01); H01M 10/0525(2010.01); H01M 2/16(2006.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 분리막(separator), 바인더(binder), 경질(crystalloid), 비정질(amorphous), 다공(porous), 기재(substrate), 코팅층(coating layer)

**C. DOCUMENTS CONSIDERED TO BE RELEVANT**

| Category* | Citation of document, with indication, where appropriate, of the relevant passages | Relevant to claim No. |
|---|---|---|
| A | KR 10-2016-0118966 A (SK INNOVATION CO., LTD.) 12 October 2016 (2016-10-12)<br>See claims 1, 3 and 9. | 1-11 |
| A | KR 10-2007-0012057 A (SAMSUNG SDI CO., LTD.) 25 January 2007 (2007-01-25)<br>See claim 1. | 1-11 |
| A | JP 6738339 B2 (HITACHI MAXELL) 12 August 2020 (2020-08-12)<br>See paragraph [0107], claims 1 and 4 and figure 3. | 1-11 |
| A | JP 2018-101639 A (ATTACCATO LLC.) 28 June 2018 (2018-06-28)<br>See claims 1 and 4. | 1-11 |
| A | KR 10-2019-0087226 A (SAMSUNG ELECTRONICS CO., LTD.) 24 July 2019 (2019-07-24)<br>See claims 1 and 3. | 1-11 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 February 2023** | **06 February 2023** |
| Name and mailing address of the ISA/KR<br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2022/095127**

| Patent document cited in search report | Publication date (day/month/year) | Patent family member(s) | Publication date (day/month/year) |
|---|---|---|---|
| KR 10-2016-0118966 A | 12 October 2016 | CN 107438912 A | 05 December 2017 |
| | | CN 107438912 B | 18 February 2022 |
| | | CN 107534117 A | 02 January 2018 |
| | | CN 107534117 B | 11 February 2022 |
| | | DE 112016001490 T5 | 04 January 2018 |
| | | JP 2018-510472 A | 12 April 2018 |
| | | JP 7073105 B2 | 23 May 2022 |
| | | KR 10-2016-0118986 A | 12 October 2016 |
| | | US 10333126 B2 | 25 June 2019 |
| | | US 10985356 B2 | 20 April 2021 |
| | | US 2018-0097216 A1 | 05 April 2018 |
| | | US 2018-0114968 A1 | 26 April 2018 |
| | | WO 2016-159720 A1 | 06 October 2016 |
| | | WO 2016-159724 A1 | 06 October 2016 |
| KR 10-2007-0012057 A | 25 January 2007 | EP 1746673 A1 | 24 January 2007 |
| | | KR 10-0686816 B1 | 26 February 2007 |
| | | US 2007-0020525 A1 | 25 January 2007 |
| | | US 7659036 B2 | 09 February 2010 |
| JP 6738339 B2 | 12 August 2020 | WO 2017-047576 A1 | 23 March 2017 |
| JP 2018-101639 A | 28 June 2018 | None | |
| KR 10-2019-0087226 A | 24 July 2019 | US 11211671 B2 | 28 December 2021 |
| | | US 2019-0221809 A1 | 18 July 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 20210132448
- KR 20220127529
- KR 20200034470
- KR 20170138958